(19) Europäisches Patentamt
European Patent Office
Office européen des brevets

(11)  **EP 2 310 162 B1**

(12)  **EUROPÄISCHE PATENTSCHRIFT**

(45) Veröffentlichungstag und Bekanntmachung des Hinweises auf die Patenterteilung:
**13.08.2014  Patentblatt 2014/33**

(21) Anmeldenummer: **09768832.9**

(22) Anmeldetag: **26.06.2009**

(51) Int Cl.:
**B23K 26/14** *(2014.01)*      **B23K 26/04** *(2014.01)*
**B23K 26/03** *(2006.01)*

(86) Internationale Anmeldenummer:
**PCT/DE2009/000891**

(87) Internationale Veröffentlichungsnummer:
**WO 2009/155908 (30.12.2009 Gazette 2009/53)**

(54) **VERFAHREN ZUM EXZENTRISCHEN AUSRICHTEN EINES LASERSCHNEIDSTRAHLS ZU EINER DÜSENACHSE UND ZUM SCHRÄGSCHNEIDEN ; ENTSPRECHENDE LASERBEARBEITUNGSMASCHINE UND COMPUTERPROGRAMM**

METHOD OF ECCENTRICALLY ORIENTING A LASER CUTTING BEAM IN RELATION TO A JET AXIS AND FOR ANGLE CUTTING ; CORRESPONDING LASER MACHINING APPARATUS AND COMPUTER PROGRAM

ROCÉDÉ D'ORIENTATION D'UN FAISCEAU LASER DE COUPE DE MANIÈRE EXCENTRÉE PAR RAPPORT À L'AXE D'UNE BUSE ET PROCÉDÉ DE COUPE OBLIQUE ; MACHINE D'USINAGE LASER CORRESPONDANTE ET PROGRAMME D'ORDINATEUR

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **28.06.2008  DE 102008030783**

(43) Veröffentlichungstag der Anmeldung:
**20.04.2011  Patentblatt 2011/16**

(73) Patentinhaber: **TRUMPF Werkzeugmaschinen GmbH + Co. KG**
**71254 Ditzingen (DE)**

(72) Erfinder:
• **BOETTCHER, Christian**
**70565 Stuttgart (DE)**

• **DILGER, Werner**
**71229 Leonberg (DE)**
• **DEMEL, Peter**
**70597 Stuttgart (DE)**
• **WEICK, Juergen-Michael**
**71679 Asperg (DE)**

(74) Vertreter: **Kohler Schmid Möbus Patentanwälte**
**Ruppmannstraße 27**
**70565 Stuttgart (DE)**

(56) Entgegenhaltungen:
EP-A- 1 684 046    JP-A- 2 092 485
JP-A- 5 057 470    JP-A- 6 039 571
US-B1- 6 423 928

**Beschreibung**

Die vorliegende Erfindung betrifft ein Verfahren zum Ausrichten eines Laserschneidstrahls exzentrisch zur Düsenachse einer Schneidgasdüse, eine Laserbearbeitungsmaschine zum Schneider und einen Computerprogramm gemäß dem Oberbegriff der Ansprüche 1, 7 und 12 (siehe, z.B., JP 45/57470 A).

Um zwei insbesondere rohrförmige Werkstücke unter Ausbildung eines Winkels von z.B. 90° miteinander zu verbinden, können diese zunächst schräg unter einem Winkel von 45° abgetrennt und anschließend an den Schnittkanten miteinander verschweißt werden. Für das Schweißen sollten die Schnittkanten möglichst flächig aneinander anliegen, was jedoch nicht möglich ist, wenn der Laserschneidstrahl während des Schneidvorgangs senkrecht zur Flächennormalen der Werkstückoberfläche ausgerichtet ist, da in diesem Fall beim Trennen verwundene Schnittflächen entstehen. Um dies zu vermeiden, wird beim sog. Laserstrahlschrägschnelden der Laserschneidstrahl und der das Laserschneiden unterstützende Überschall-Schneidgasstrom unter einem Winkel zur Flächennormalen geneigt, dem sog. Schrägschneidwinkel. Wird der Schrägschneidwinkel während des Schneidprozesses variiert, kann auch bei einem schrägen Schnitt an einem Rohr eine plane Schnittfläche erzeugt werden, so dass z.B. ein Verschweißen der Schnittkanten wesentlich vereinfacht wird. Es versteht sich, dass das Schrägschneiden nicht nur an rohrförmigen, sondern auch insbesondere an dicken, platterrförmigen Werkstücken vorgenommen werden kann, um diese an den beim Schrägschneiden gebildeten, schrägen Schnittkanten beispielsweise leichter miteinander verschweißen zu können.

Der oben beschriebene Laserstrahlschrägschneidprozess ist aber bis jetzt noch keineswegs beherrscht, d.h. es muss mit deutlichen Vorschubsreduzierungen (bei einem Schrägschneidwinkel von 45° bis zu 70%) und deutlichen Qualitätseinbußen gegenüber dem konventionellen Laserstrahlschneiden mit senkrecht zur Werkstückoberfläche äusgerichtetem Laserschneidstrahl gerechnet werden. Insbesondere wiesen die beim Laserstrahlschrägschneiden erzeugten Schnittkanten in Abhängigkeit vom Schrägschneidwinkel unterschiedliche Oberflächengüten auf, wobei an einer Schnittkante eine starke Gratbildung, an der anderen Schnittkante eine raue Oberflächenstruktur zu beobachten ist.

Aus dem Artikel "Melt Expulsion by a Coaxial Gas Jet in Trepanning of CMSX-4 with Microsecond Nd:YAG Laser Radiation" von J. Willach et al., Proceedings of the SPIE, Vol. 5063, pp. 435 - 440, ist es bekannt, beim Trepanieren von Mikrobohrungen in Turbinenschaufeln den unter einem schrägen Winkel (hier für einen Bohrprozess) zum Werkstück ausgerichteten Laserschneidstrahl und den parallel zu diesem ausgerichteten Überschall-Schneidgasstrom bzw. die Schneidgasdüse lateral zueinander zu verschieben, um den Staudruckpunkt bzw. das Hochdruckgebiet des Überschall-Schneidgasstroms unmittelbar über der Bohrung zu positionieren. Auf diese Weise soll verhindert werden, dass der Gasdruck und die Dicke der erstarrten Schmelze periodisch entlang der Wand der Bohrung variieren, wie dies bei koaxialer Ausrichtung von Gasströmung und Laserstrahlachse bei schräg dazu angeordneter Werkstückoberfläche der Fall ist. Durch den Lateralversatz sollen diese Oszillationen unterbunden und ein erhöhter Gasfluss durch die Bohrung und damit ein leichterer Austritt der Schmelze an der Unterseite der Bohrung erreicht werden. Um eine durch Trepanieren erhaltene Bohrung zu vergrößern, wird eine weitere Bohrung mit Überlappung daneben platziert, wobei sich Überlappungen zwischen den Bohrungen im Bereich zwischen 50% und 80 % als besonders günstig ergeben haben.

Auch bei anderen Anwendungen, z.B. beim Schnellschneiden, ist es zur Steigerung der Schneidgeschwindigkeit günstig, wenn der Laserschneidstrahl und das Zentrum des Schneidgasstroms zueinander versetzt auf die Werkstückoberfläche auftreffen. Zur Erzeugung eines solchen Versatzes ist eine exzentrische Ausrichtung des Laserschneidstrahls zur Düsenachse bzw. zur Düsenmitte erforderlich.

**Aufgabe der Erfindung**

Es ist die Aufgabe der vorliegenden Erfindung, ein Verfahren zum Ausrichten eines fokussierten Laserschneidstrahls exzentrisch zur Düsenachse bzw. Düsenmitte einer Schneidgasdüse, ein darauf aufbauendes Verfahren zum Laserstrahlschrägschneiden sowie einen Laserbearbeitungskopf und eine Laserbearbeitungsmaschine zur Durchführung der Verfahren anzugeben, die besonders einfach gesteuert werden können, so dass insbesondere bei Schrägschneiden ein qualitativ hochwertiger Schnitt bei hohen Vorschubgeschwindigkeiten ermöglicht wird.

**Gegenstand der Erfindung**

Diese Aufgabe wird erfindungsgemäß gelöst durch ein Verfahren zum Ausrichten eines fokussierten Laserschneidstrahls exzentrische zur Düsenachse einer Schneidgasdüse gemäß Anspruch 1.

Zur Fokussierung des Laserschneidstrahls auf das Werkstück kann ein Unsenelement zwischen dem Umlenkspiegel und der Schneidgasdüse vorgesehen sein, das auch dem Druckaufbau des Schneidgases dient, so dass ein Überschall-Schneidgasstrom durch die Düse erzeugt werden kann. Alternativ kann zur Fokussierung des Laserschneidstrahls der Umlenkspiegel als Hohlspiegel, insbesondere als Parabolspiegel ausgebildet sein. In diesem Fall kann für den Druckaufbau des Schneldgases ein Druckfenster, z.B. in Form einer Planplatte, vorgesehen sein, oder die Schneidgasdüse kann als Ringspaltdüse ausgebildet sein.

Bei einer Variante des Verfahrens werden die Schneidgasdüse und der Umlenkspiegel in einer zweiten Baueinheit eines Laserbearbeitungskopfs angeordnet, die um die der Strahleinfallsrichtung entsprechende Richtung relativ zu einer ersten Baueinheit verdrehbar gelagert ist. Die für die Ausrichtung bzw. Winkeleinstellung der Schneidgasdüse relativ zum Werkstück benötigte Drehachse kann in diesem Fall als Kompensationsachse dienen.

Das oben beschriebene Verfahren zum exzentrischen Ausrichten des Laserschneidstrahls kann bei unterschiedlichen Anwendungen vorteilhaft zum Einsatz kommen z.B. beim Schneilschneiden, bei dem der Laserschneidstrahl in Vorschubrichtung bezüglich des Zentrums des Überschall-Schneidgasstroms versetzt wird, oder beim Schrägschneiden, bei dem ein Versatz zwischen Laserschneidstrahl und Zentrum des Schneidgasstroms rechtwinklig zur Vorschubrichtung günstig ist. Ein solches Schrägschneidverfahren wird nachfolgend näher beschrieben.

Ein weiterer Aspekt der Erfindung betrifft eine Laserbearbeitungsmaschine zum Schneiden, insbesondere zum Schrägschneiden eines Werkstücks mittels eines Laserschneidstrahls gemäß Anspruch 7.

Der Laserbearbeitungskopf kann zur Fokussierung des Laserschneidgasstrahls eine zwischen dem Umlenkspiegel und der Schneidgasdüse angeordnete Fokussierlinse aufweisen, die auch dem Druckaufbau dient. Alternativ oder zusätzlich kann der Umlenkspiegel als Hohlspiegel ausgeführt sein, der ebenfalls eine Fokussierung ermöglicht in letzterem Fall kann der Druckaufbau des Schneidgases erzeugt werden, indem ein Druckfenster in der zweiten Baueinheit vorgesehen wird. Alternativ kann der Druckaufbau auch auf andere Weise erfolgen, z.B. indem die Schneidgasdüse als Ringspaltdüse ausgebildet wird.

Ein weiterer Aspekt der Erfindung betrifft ein Computerprogrammprodukt, welches Codemittel zum Erstellen eines Bearbeitungsprogramms aufweist, das zum Durchführen aller Schritte des oben beschriebenen Verfahrens ausgelegt ist, wenn das Bearbeitungsprogramm auf der Steuerungseinrichtung der Laserbearbeitungsmaschine abläuft (siehe Anspruch 12). Das Computerprogrammprodukt kann z.B. eine Diskette oder ein anderer Datenträger sein, auf dem ein Programmcode als Codemittel gespeichert ist, der geeignet ist, das Bearbeitungsprogramm anhand von durch einen Benutzer Ober eine geeignete Bedienoberfläche vorgebbaren Angaben über den gewünschten Schrägschneidprozess (Art des Werkstücks. Art der Kontur, etc.) zu erstellen. Das Bearbeitungsprogramm kann schon lange vor dem Bearbeiten des Werkstückes erstellt werden und erst unmittelbar vor dem Bearbeiten mittels eines computerlesbaren Mediums oder mittels einer anderen Form der Datenübertragung an die Steuerungseinrichtung übermittelt werden.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

**Es zeigen:**

Fig. 1a,b    schematische Darstellungen einer Laserbearbeitungsmaschine mit einem Laserschneidkopf, der zur Fokussierung eines Schneidgasstrahls eine Fokussierlinse bzw. einen Parabolspiegel aufweist,

Fig. 2    eine schematische Außenansicht des Laserschneidkopfs der Laserbearbeitungsmaschine von Fig. 1a (in Y-Richtung betrachtet),

Fig. 3a,b    schematische Darstellungen (a) eines rohrförmigen Werkstücks mit einem 45°-Abschnitt mit ebener Schnittfläche, sowie (b) die Darstellung eines Laserstrahlschrägschneidprozesses zur Erzeugung eines solchen Abschnitts mittels eines exzentrisch zu einem Überschall-Schneidgas-strom ausgerichteten Laserschneidstrahl,

Fig. 4a-c    schematische Darstellungen der elektrischen Feidstärke zwischen einem Werkstück und einer sensorischen Schneidgasdüse bei einem Schrägschneidwinkel von 0°, 30° bzw. 45°.

Fig. 5a,b    eine schematische Darstellung (a) eines Teilbereiches einer erfindungsgemäßen Laserbearbeitungsmaschine bei der Bearbeitung eines plattenförmigen Werkstückes, sowie (b) der winkelschiefen Fokussierung des Laserschneidstrahls zur Erzeugung eines lateralen Versatzes zwischen Laserschneidstrahl und Oberschall-Schneidgasstrom.

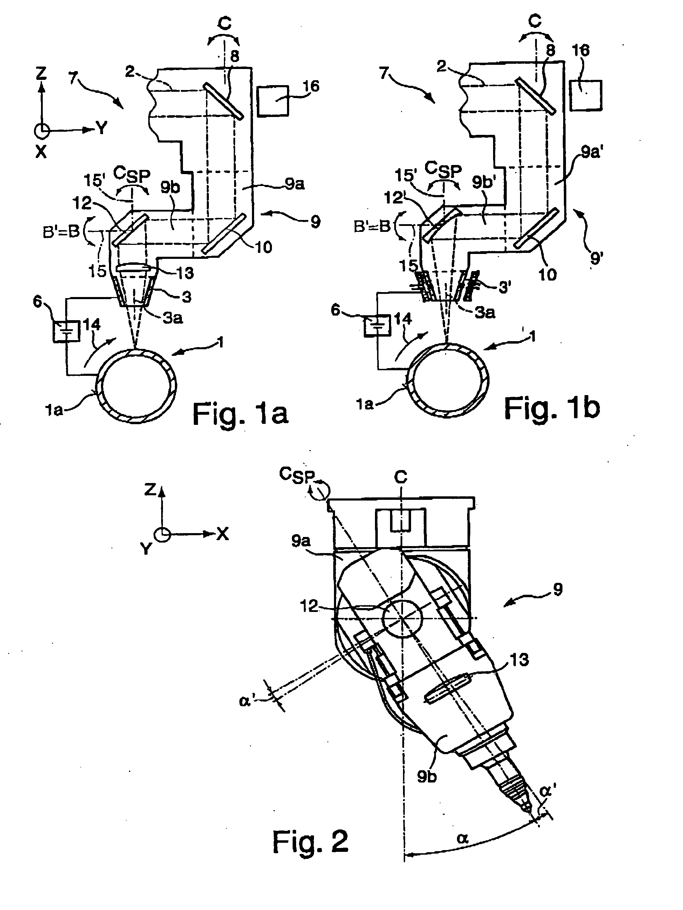

**Fig. 1a** zeigt einen Teilbereich einer Laserbearbeitungsmaschine **7**, welche zur schneidenden Bearbeitung der Werkstückoberfläche **1a** eines rohrförmigen Werkstücks **1** mittels eines Laserschneidstrahls **2** ausgelegt ist. In der Laserbearbeitungsmaschine 7 wird der Laserschneidstrahl **2** mittels einer nicht näher beschriebenen Strahlführung auf einen Umlenkspiegel **8** gelenkt und tritt nachfolgend in eine erste Baueinheit **9a** eines Laserbearbeitungskopfs **9** ein, in der ein weiterer Umlenkspiegel **10** angeordnet ist Die Umlenkspiegel 8, 10 können als adaptive Spiegel ausgebildet sein.

An der ersten Baueinheit 9a ist eine zweite Baueinheit **9b** des Laserbearbeitungskopfs 9 mittels eines (nicht gezeigten) motorischen Antriebes um eine zweite Richtung (B-Achse) relativ zur ersten Baueinheit 9a drehbar gelagert. Der in der ersten Baueinheit 9a angeordnete Umlenkspiegel 10 bewirkt eine Umlenkung des Laserstrahls 2 aus einer ersten Richtung C in eine zu dieser senkrechte zweite Richtung B. Die erste Baueinheit 9a kann hierbei an der Laserbearbeitungsmaschine 7 drehbar gelagert sein, so dass die erste Baueinheit 9a mittels eines motorischen Antriebs um die erste Richtung (C-Achse) verdreht werden kann; dies ist aber nicht zwingend erforderlich.

In der zweiten Baueinheit 9b ist ein weiterer Umlenkspiegel **12** angeordnet, welcher den Laserstrahl 2 aus der zweiten Richtung B zu einer Fokussierlinse **13** und von dort weiter auf das Werkstück 1 bzw. auf die Werkstückoberfläche **1a** umlenkt. Die Fokuslage des Laserstrahls 2 kann hierbei durch den adaptiven Umlenkspiegel 10 in gewissen Grenzen verändert werden, indem dessen Form z.B. mit Hilfe von Piezo-Elementen oder durch Druckbeaufschlagung mit einem Fluid an seiner Rückseite geeignet verändert wird. Als Bewegungseinrichtung zur Bewegung des Werkstücks 1 in der ZY-Ebene weist die Laserbearbeitungsmaschine 7 ein Spannfutter **14** (angedeutet durch einen Pfeil) auf, welches zur Erzeugung einer Drehbewegung des Werkstücks 1 dient, wobei mittels des Spannfutters 14 gleichzeitig auch eine Bewegung des Werkstücks 1 in X-Richtung erfolgen kann. Es versteht sich, dass ggf. auch der Laserbearbeitungskopf 9 mittels konventioneller Verschiebe- bzw. Dreheinheiten zusätzlich in weiteren Richtungen verschiebbar bzw. verdrehbar sein kann.

Die Ausrichtung der Düsenachse **3a** der Schneidgasdüse 3 unter einem Schrägschneidwinkel $\alpha$ zur C-Achse (vgl. Fig. 2) erfolgt durch Verdrehen der zweiten Baueinheit 9b um die B-Achse. Bei der Verdrehung der zweiten Baueinheit 9b relativ zur ersten Baueinheit 9a wird auch der in der zweiten Baueinheit 9b angeordnete Umlenkspiegel 12 mit verdreht, so dass dieser unabhängig vom Schrägschneidwinkel $\alpha$ koaxial zur Düsenachse 3a ausgerichtet bleibt.

Eine exzentrische Ausrichtung bzw. Positionierung des Laserschneidstrahls 2 relativ zur Düsenachse 3a der Schneidgasdüse 3 kann für verschiedene Anwendungen vorteilhaft sein, wie unten näher ausgeführt wird. Um eine solche Ausrichtung in Form eines lateralen Versatzes zwischen dem Laserstrahl 2 und der Düsenachse 3a zu erreichen, kann der Umlenkspiegel 12, z.B. ein wassergekühlter Kupferspiegel, mittels eines numerisch gesteuerten Antriebs in Form eines Servo-Motors **15** (in Fig. 1a gestrichelt angedeutet) zusätzlich um einen Drehwinkel $\alpha'$ um die zweite Richtung B verdreht werden, d.h. der Antrieb 15 bildet eine unabhängige B'-Achse, die koaxial zur bereits vorhandenen B-Achse verläuft. Auf diese Weise kann die exzentrische Ausrichtung bzw. Positionierung des Laserstrahls 2 zur Düsenmitte der Schneidgasdüse 3 von der Einstellung des Schrägschneidwinkets $\alpha$ unabhängig erfolgen. Der Schrägschneidwinkel $\alpha$ entspricht somit einem Drehwinkel B um die B-Achse, der Drehwinkel $\alpha'$ einem Drehwinkel B' um die B'-Achse.

Der in Fign. 1a und 2 gezeigte Laserbearbeitungskopf 9 zeichnet sich durch einen besonders robusten Aufbau auf. Ferner kann bei dem Laserbearbeitungskopf 9, bei dem die Drehachse B der zweiten Baueinheit 9b und die Drehachse B' des Umlenkspiegels 12 koaxial angeordnet sind, auf besonders einfache steuerungstechnische Weise die für Anwendungen wie das Schrägschneiden erforderliche Exzentrizität des Laserstrahls 2 zur Düsenachse 3a mittels der B-Achse auf die beabsichtigte Position des Laserstrahls 2 auf dem Werkstück 1 zurückkorrigiert werden.

Dies kann dadurch erreicht werden, dass eine Steuerungseinrichtung **16,** die den Servo-Motor 15 ansteuert, um den Umlenkspiegel 12 um den Drehwinkel $\alpha'$ aus seiner Ruhelage, bei der die Strahlausfallsrichtung des Laserschneidstrahls 2 koaxial zur Düsenachse 3a verläuft, zu verdrehen, gleichzeitig die zweite Baueinheit 9b in entgegen gesetzter Richtung unter demselben Drehwinkel $\alpha'$ um die B-Achse (vermindert) verdreht, so dass der laterale Versatz der Position des fokussierten Laserstrahls 2 auf dem Werkstück 1, der durch die exzentrische Ausrichtung des Laserstrahls 2 in der Schneidgasdüse 3 hervorgerufen wird, ausgeglichen werden kann, damit der angestrebte Tool Center Point (TCP) erreicht wird. Durch diese steuerungstechnische (Zwangs-)kopplung der beiden koaxialen Achsen B und B' kann die Steuerung der Makrobewegung des Laserbearbeitungskopfs 9 und insbesondere die Variation des Schrägschneidwinkels $\alpha$ so erfolgen, als ob der Laserbearbeitungsstrahl 2 stets koaxial zur Düsenachse 3a ausgerichtet wäre.

Es versteht sich, dass alternativ oder zusätzlich zur Möglichkeit, den Umlenkspiegel 12 um die B'-Achse zu verdrehen, der Umlenkspiegel 12 auch um eine zur Düsenachse 3a koaxiale Achse $C_{SP}$ verdreht werden kann, wozu ein weiterer numerisch gesteuerter Antrieb **15'** in der zweiten Baueinheit 9b des Laserbearbeitungskopfs 9 vorgesehen werden kann, wie in Fig. 1a dargestellt ist. In jedem Fall kann durch Vorsehen einer Zusatz-Drehachse, welche parallel zur Einfallsrichtung des Laserstrahls **2** auf den Umlenkspiegel 12 (B'-Achse) bzw. parallel zur Ausfallsrichtung des Laserstrahls 2 ($C_{SP}$-Achse) verläuft, auch bei exzentrischer Ausrichtung des Laserschneidstrahls 2 an der Schneidgasdüse 3 in der Steuerungseinheit 16 eine besonders einfache numerische Steuerung der Position des Laserstrahls 2 auf dem Werkstück 1 erfolgen.

In Fig. 1b ist eine Laserbearbeitungsmaschine 7 gezeigt, die einen Laserbearbeitungskopf **9'** aufweist, der sich vom dem in Fig. 1a gezeigten Laserbearbeitungskopf 9 dadurch unterscheidet, dass der plane Umlenkspiegel 12 durch einen Hohlspiegel **12'** mit annähernd parabolischer Geometrie ersetzt ist. Der Hohlspiegel 12' dient der Fokussierung des Laserschneidstrahls 2, so dass auf das Vorsehen einer Fokussierlinse in dem Laserbearbeitungskopf 9' verzichtet werden kann. Da die Fokussierlinse zum Druckaufbau des Schneidgases nicht mehr zur Verfügung steht, ist die Schneidgasdüse 3' als Ringspaltdüse ausgebildet, die den Druckaufbau ermöglicht, indem dieser das Schneidgas zugeführt wird. Es versteht sich, dass der Druckaufbau in dem Laserbearbeitungskopf 9' auch auf andere Weise erfolgen kann, z.B. durch Vorsehen eines Druckfensters in der zweiten Baueinheit 9b, das als transmissives optisches Element, insbesondere in Form einer Planplatte ausgebildet sein kann. Die Erzeugung der Exzentrizität mittels der Fokussierlinse 13 unterscheidet sich bei den hier verwendeten Drehwinkeln α' von typischer Weise weniger als 1°, insbesondere von weniger als 0,5° im Ergebnis nur unwesentlich von der Fokussierung mit Hilfe des Hohlspiegels 12'. Die Drehwinkel α' dürfen nicht zu groß gewählt werden, da ansonsten der Laserschneidstrahl 2 auf den Innenrand der Düsenöffnung der Schneldgasdüse 3 auftreffen würde.

Nachfolgend wird ein Schrägschneidprozess als eine mögliche Anwendung für den in Fign. 1a,b und 2 gezeigten Laserbearbeitungskopf 9, 9' bzw. die Laserbearbeitungsmaschine 7 detailliert beschrieben. Es versteht sich, dass der Laserbearbeitungskopf 9, 9' sich auch bei anderen Anwendungen vorteilhaft einsetzen lasst, z.B. für das Schnellschneiden, bei dem ein Anstellen des Laserschneidstrahls in Vorschubrichtung erfolgt.

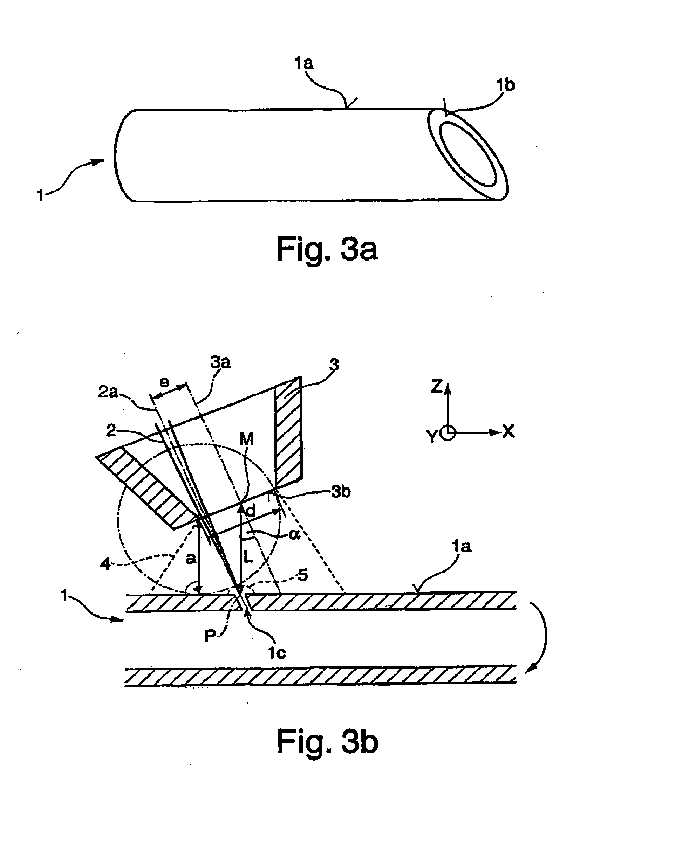

Fig. 3a zeigt das rohrförmige Werkstück 1 von Fign. 1a,b, an dem ein 45°-Abschnitt mit einer ebenen Schnittfläche 1b gebildet ist, welche mit einem weiteren (nicht gezeigten) rohrförmigen Werkstück mit ebener Schnittfläche unter Bildung eines 90°-Winkels entlang einer die Schnittflächen verbindenden dünnen Schweißnaht verschweißt werden kann. Um die ebene Schnittfläche 1b zu erzeugen, ist es erforderlich, an dem rohrförmigen Werkstück 1 einen Schrägschneidprozess durchzuführen, bei dem der Schrägschneidwinkel α (vgl. Fig. 2) Im Bereich zwischen -45° und 45° variiert wird, da bei einem herkömmlichen Schneidprozess mit konstantem Schrägschneidwinkel α eine verwundene Schnittfläche an dem Werkstück 1 entstehen würde.

Fig. 3b zeigt eine Momentaufnahme eines solchen Laserstrahl-Schrägschneidprozesses an dem rohrförmigen Werkstück 1 bei einem Schrägschneidwinkel α von ca - 20°, bei dem der Laserschneidstahl 2 mit seiner Strahlachse 2a bezüglich der Flächennomalen auf die Werkstückoberfläche 1a ausgerichtet ist. Parallel zum Laserschneldstrahl 2 ist die Düsenachse 3a einer Schneidgasdüse 3 ausgerichtet, aus der ein Überschall-Schneidgasstrom 4 austritt und auf die Werkstückoberfläche 1a gerichtet wird. Der Überschall-Schneidgasstrom 4 bildet hierbei einen Hochdruckbereich 5 an der Werkstückoberfläche 1a aus, der zur Düsenachse 3a der Schneidgasdüse 3 versetzt ist und dessen Lage bezüglich der Düsenachse 3a neben dem Schrägschneidwinkel α auch vom Durchmesser d der Schneidgasdüse 3 und dem Abstand a zwischen dem Rand der Düsenöffnung 3b der Schneidgasdüse 3 und der Werkstückoberfläche 1a abhängt.

Um den Laserschneidstrahl 2 im Hochdruckbereich 5 auf der Werkstückoberfläche 1a zu positionieren, wird die Strahlachse 2a des Laserschneidstrahls 2 und damit auch die Schnittfuge 1c bei dem Laserstrahlschrägschneidprozess um einen Abstand (Exzentrizität) e zur Düsenachse 3a versetzt. Zur Bestimmung der Exzentrizität e in Abhängigkeit von den Parametern α, d und a wird im Folgenden ein einfaches geometrisches Modell verwendet, welches auf dem Impukerhaltungssatz basiert: Der höchste Druck und damit die Mitte des Hochdruckgebiets 5 befinden sich dort, wo die Atome des Überschall-Schneidgasstroms 4 im Wesentlichen senkrecht auf die Werkstückoberfläche 1a auftreffen. Geht man davon aus, dass die Gasmoleküle annähernd konzentrisch aus der Düsenöffnung 3b austreten, so ist diese Position P festgelegt durch denjenigen Punkt auf der Werkstückoberfläche 1a, welcher direkt unterhalb des Mittelpunkts M der Düsenöffnung 3b und um eine Länge L von diesem beabstandet auf der Werkstückoberfläche 1a liegt.

Wie aus Fig. 3b unmittelbar zu ersehen ist, gilt: $e = L \sin(\alpha)$. Wie aus Fig. 3b ebenfalls direkt abgelesen werden kann, gilt für die Länge $L = a + d / 2 \sin(\alpha)$. Somit ergibt sich insgesamt für die Exzentrizität zwischen Strahlachse 2a des Laserschneidstrahls 2 und der Düsenachse 3a der Laserbearbeitungsdüse 3 der folgende Zusammenhang:

$$e = \sin(\alpha)\,(a + (d / 2)\,\sin(\alpha)).$$

Aus obiger Formel kann bei gegebenem, während des gesamten Schrägschneidens konstantem Düsendurchmesser d sowie dem vorgebbaren, variablen Abstand a zwischen Schneidgasdüse 3 und Werkstückoberfläche 1a und dem Schrägschneidwinkel α die Exzentrizität e bestimmt werden, die eingestellt werden muss, damit der Laserschneidstrahl 2 im Hochdruckgebiet 5 verbleibt, wenn das rohrförmige Werkstück 1 unter Variation des Schrägschneidwinkels α entlang einer Vorschubrichtung Y eines XYZ-Koordinatensystems gedreht wird, wie in Fig. 3b durch einen Pfeil angedeutet ist Ein solcher Vorschub ist notwendig, damit an dem rohrförmigen Werkstück 1 der in Fig. 3a gezeigte, 45°-Abschnitt erzeugt werden kann. Bei der Variation des Schrägschneidwinkels α in X-Richtung, d.h. rechtwinklig zur Vorschubrichtung Y in einem Bereich zwischen - 45° und 46° muss die Position P des Laserschneidstrahls 2 entsprechend nachgeführt werden, damit der Laserschneidstrahl 2 im Hochdruckbereich 5 verbleibt.

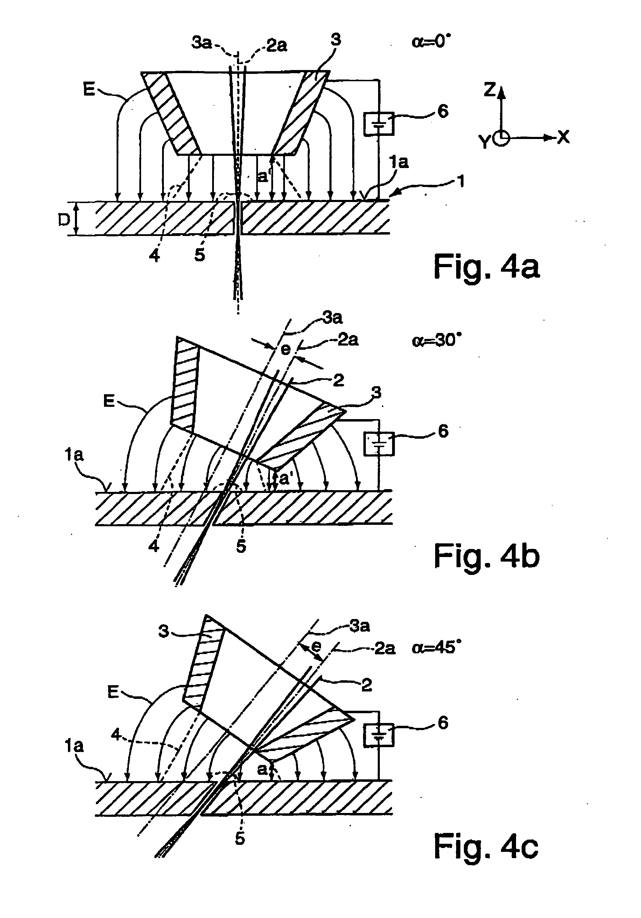

Hierzu ist es günstig, den Abstand a zwischen der Scheidgasdüse 3 und dem Werkstück 1 während des Schrägschneidprozesses zu überwachen und ggf. zu regeln. Zu diesem Zweck kann wie in Fign. 4a-c gezeigt eine kapazitive Abstandsmesseinrichtung 6 vorgesehen sein, welche wie in der eingangs zitierten EP 1 684 046 A1 oder der EP 0 873 813 B1 ausgebildet sein kann, und deren Funktionsweise hier nicht im Einzelnen beschrieben wird. Die Abstandsmesseinrichtung 6 erzeugt eine Potentialdifferenz zwischen dem metallischen Düsenkörper der Schneidgasdüse 3 und dem ebenfalls metallischen Werkstück 1, so dass sich zwischen beiden ein elektrisches Feld E ausbildet, dessen Feldlinien in Fign. 4a-c für Schrägschneidwinkel $\alpha$ von 0°; 30° und 45° gezeigt sind.

In Abhängigkeit von der Kapazität, die zwischen der Schneidgasdüse 3 und dem metallischen Werkstück 1 gemessen wird, verändert sich die Lage der Feldlinien E und somit die Kapazität zwischen Werkstück 1 und Schneidgasdüse 3. Um den Zusammenhang zwischen Kapazität und Abstand a bei gegebenem Schrägschneidwinkel $\alpha$ zu ermitteln, kann z.B. bei den drei in Fign. 4a-c gezeigten Schrägschneidwinkeln $\alpha$ jeweils eine Kapazitätsmessung bei variablem, bekanntem Abstand vorgenommen werden, um Kennlinien für den Abstand in Abhängigkeit von der Kapazität bei konstantem Schrägschneidwinkel zu erhalten. Für die Abstandsmessung bei Schrägschneidwinkeln $\alpha$, für die keine solche Kennlinie bestimmt wurde, kann zwischen den bekannten Kennlinien interpoliert werden. Der kapazitiv gemessene Abstand a' wird hierbei zwischen der Außen kante der Schneidgasdüse 3 und dem Werkstück 1 bestimmt, wohingegen der in Fig. 1b gezeigte Abstand a zwischen der Kante der Düsenöffnung 3b und dem Werkstück 1 definiert ist Es versteht sich, dass bei bekannter Düsengeometrie der Schneidgasdüse 3 in der Abstandsmesseinrichtung 6 eine Umrechnung des kapazitiv gemessenen Abstands a' in den Abstand a zwischen der Kante der Düsenöffnung 3a und dem Werkstück 1 erfolgen kann, um letzteren in die oben angegebene Formel einzusetzen.

Wie in Fign. 4a-c ebenfalls zu erkennen ist, wird die Strahlachse 2a des Laserschneidstrahls 2 bei den unterschiedlichen Schrägschneidwinkeln $\alpha$ in unterschiedlichem Abstand e zur Düsenachse 3a ausgerichtet, um den Schneidgasstrahl 2 im Hochdruckgebiet 5 zu halten. Weiterhin wird der Laserschneidstrahl 2 nicht auf der Werkstückoberfläche 1a fokussiert, sondern darunter, und zwar in einem Abstand von mehr als 50% der Dicke d des Werkstücks 1 von dessen Werkstückoberseite **1a.** Durch eine solche Fokussierung kann die Qualität der Schnittkanten beim Schrägschneiden zusätzlich gesteigert werden. Die Fokussierung kann hierbei auch in einem Abstand von mehr als 70 % der Dicke des Werkstücks 1 von der Werkstückoberseite 1a erfolgen; abhängig von den Prozessbedingungen kann der Laserschneidstrahl 2 auch unterhalb der Unterseite des Werkstücks 1 fokussiert werden.

Die in Fig. 1a,b gezeigte Steuerungseinrichtung 16 dient hierbei der Ansteuerung der Achsen B' bzw. $C_{SP}$ derart, dass der Laserschneidgasstrahl 2 in der X-richtung im gewünschten Abstand zum (in Fign. 1a,b nicht gezeigten) Übemchall-Schneidgässtrahl 4 ausgerichtet ist. Die oben angegebene Formel für die Exzentrizität e kann hierbei in der Maschinensteuerung der Laserbearbeitungsmaschine 1 hinterlegt werden, so dass die Steuerungseinrichtung 16 die optimale Exzentrizität selbst berechnen kann.

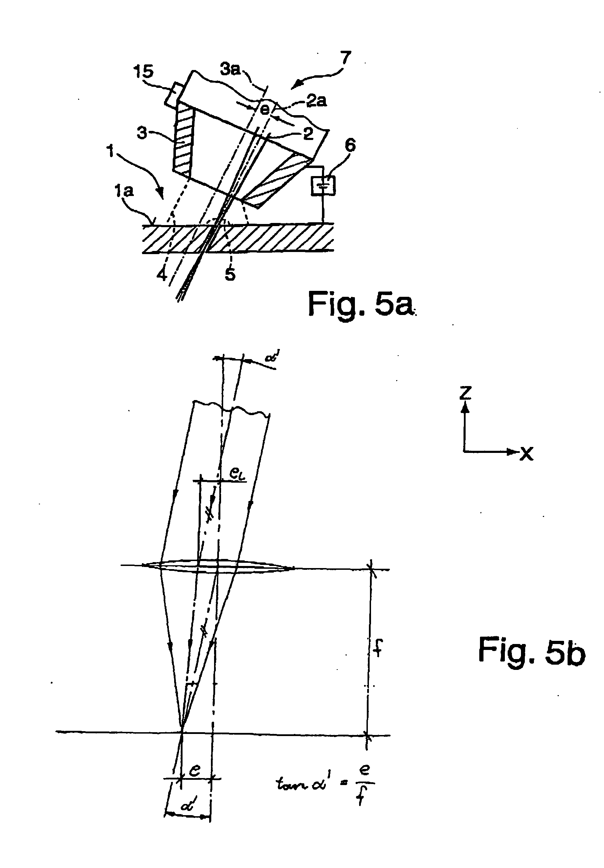

Es versteht sich, dass die Laserbearbeitungsmaschine 7 von Fig. 1a,b auch zum Schrägschneiden eines plattenförmigen Werkstücks 1 ausgelegt sein kann, wie In **Fig. 5a** dargestellt ist, bei der die Vorschubrichtung in X-Richtung verläuft. Auch in diesem Fall kann die Exzentrizität e zwischen Laserstrahlachse 2 und Düsenachse 3a auf die oben beschriebene oder ggf. auch auf andere Weise eingestellt werden. Insbesondere beim in Fig. 5a gezeigten Schneiden von platteförmigen Werkstücken muss der Schrägschneidwinkel nicht zwingend während des Laserstrahlschneidens variiert werden. Vielmehr kann der Schrägschneidwinkel auch einen konstanten Wert annehmen, so dass eine plane, schräge Schnittkante an dem Werkstück 1 gebildet wird. Bei der Verbindung zweier solcher plattenförmiger Werkstücken unter einem Winkel von z.B. 90° entlang zweier schräger Schnittkanten liegen diese flächig aneinander an, so dass die zwei plattenförmigen Werkstücken leichter miteinander verschweißt werden können. Es versteht sich, dass auch an plattenförmigen Werkstücken kompliziertere geometrische Formen geschnitten werden können, die eine Veränderung des Schrägschneidwinkels während des Laserstrahlschneidens erfordern.

Es versteht sich weiterhin, dass zur Erzeugung eines Versatzes zwischen der Strahlachse 2a des Laserschneidstrahls 2 und dem Überschall-Schneldgasstrom 4 bzw. der Düsenachse 3a auch andere Möglichkeiten bestehen als oben beschrieben, z.B. kann auch durch Verschieben oder Verkippen eines optischen Elements, z.B. der Umlenkspiegel 12a, 12b die gewünschte Exzentrizität e bezogen auf die Düsenmitte erzeugt werden. Es versteht sich, dass bei dem Schrägschneidprozess die Laserstrahlachse 2a nicht zwingend parallel zur Düsenachse 3a ausgerichtet ist. Daher ist es möglich, die Exzentrizität e auf der Werkstückoberfläche 1a durch Drehen des Hohlspiegels 12' oder durch winkelschiefes Fokussieren an der Fokussierlinse 13 zu erzeugen, wie im Folgenden anhand von **Fig. 5b** dargestellt wird.

Zur winkelschiefen Fokussierung kann der Umlenkspiegel 12 mittels eines der in Fign. 1a,b gezeigten Drehantriebe 15, 15' verdreht werden, so dass der Laserschneidstrahl 2 nicht senkrecht, sondern unter einem Winkel $\alpha'$ bezüglich der Düsenachse auf die Fokussierlinse 13 auftrifft und dabei mit seiner Laserstrahlachse 2a bezüglich der optischen Achse 13a der Fokussierlinse 13 um einen Abstand $e_L$ in X-Richtung versetzt auftrifft. Der zur Erzeugung einer gewünschten Exzentrizität e auf dem Werkstück 1 erforderliche Kippwinkel $\alpha'$ lässt sich hierbei durch einfache geometrische Überlegungen bestimmen. Es versteht sich, dass zur winkelschiefen Fokussierung nicht zwingend die Erzeugung eines Abstands $e_L$ zwischen der optischen Achse 13a der Fokussierlinse 13 und der Laserstrahlachse 2a erforderlich ist, sondern dass die Laserstrahlachse. 2a idealer Weise die Fokussierlinse 13 zentrisch an deren optischen Achse 13a schneidet.

Um geeignete Prozessbedingungen für den Schrägschneidprozess zu erhalten, wird als Schneidgas ein inertes Gas, z.B. Stickstoff, verwendet, das sich unter einem hohen Schneidgasdruck von typischer Weise mehr als 10 bar in einem (nicht gezeigten) Druckraum des Laserschneidkopfs 9 befindet, der sich an die Schneidgasdüse 3 anschließt, oder der Ringspaltdüse 3' des Laserbearbeitungskopfs 9 zugeführt wird. Ferner sollte der Abstand zwischen der Schneldgasdüse 3, 3' und der Werkstückoberfläche 1a möglichst gering gewählt werden, um optimale Schneidergebnisse zu erhalten. Auch ist es für das Schrägschneiden bei großen Schrägschneidwinkeln von z.B. 45° günstig, wenn der (Innen-)Durchmesser der Schneidgasdüse 3 groß gewählt wird, z.B. 2 mm oder mehr, wobei nicht zwingend ein runder Düsenquerschnitt gewählt werden muss.

Der oben beschriebene grundsätzliche Prozess zum Laserstrahlschrägschneiden ist vom bearbeiteten Material sowie von dessen Dicke weitgehend unabhängig und kann insbesondere zum Schneiden von Edelstahl, Baustahl oder Aluminium eingesetzt werden. Es versteht sich, dass der Schrägschneidprozess nicht auf das Trennschneiden von rohrartigen Werkstücken beschränkt ist, vielmehr können auf die oben beschriebene Weise mittels des Laserschneidstrahls beliebige Konturen z.B. auch an plattenförmigen Werkstücken geschnitten werden. In jedem Fall können sowohl eine hohe Qualität der beim Trennschnitt erzeugten Schnittkanten als auch Vorschubgeschwindigkeiten erreicht werden, die denen beim senkrechten Laserstrahlschneiden bezogen auf die effektive Schnitttiefe vergleichbar sind.

**Patentansprüche**

1. Verfahren zum Ausrichten eines fokussierten Laserschneidstrahls (2) exzentrisch zur Düsenachse (3a) einer Schneidgasdüse (3), **gekennzeichnet durch**:

    Verdrehen eines im Strahlengang des Laserschneidstrahls (2) vor der Schneidgasdüse (3) angeordneten Umlenkspiegels (12, 12') um eine zur Düsenachse (3a) koaxiale Richtung ($C_{SP}$) und/oder um eine zur Düsenachse (3a) senkrechte, der Strahleinfallsrichtung des Laserstrahls (2) auf den Umlenkspiegel (12, 12') entsprechende Richtung (B'), wobei zum exzentrischen Ausrichten der Umlenkspiegel (12, 12') unter einem Drehwinkel ($\alpha$') aus einer Ruhelage, bei der die Strahlausfallsrichtung des Laserschneidstrahls (2) koaxial zur Düsenachse (3a) verläuft, verdreht wird, wobei gleichzeitig der Umlenkspiegel (12, 12') gemeinsam mit der Schneidgasdüse (3) unter demselben Drehwinkel ($\alpha$') um die der Strahleinfallsrichtung entsprechende Richtung (B) vermindert gedreht wird.

2. Verfahren nach Anspruch 1, bei dem der Laserschneidstrahl (2) an einem zwischen dem Umlenkspiegel (12) und der Schneidgasdüse (3) angeordneten Linsenelement (13) fokussiert wird.

3. Verfahren nach Anspruch 1, bei dem der Laserschneidstrahl (2) an dem als Hohlspiegel ausgebildeten Umlenkspiegel (12') fokussiert wird.

4. Verfahren nach einem der vorhergehenden Ansprüche, bei dem ein Überschall-Schneidgasstrom (4) an der Schneidgasdüse (3) mittels eines Linsenelements (13) und/oder mittels eines Druckfensters erzeugt wird.

5. Verfahren nach einem der Ansprüche 1 bis 3, bei dem an der als Ringspaltdüse ausgebildeten Schneidgasdüse (3') ein Überschall-Schneidgasstrom (4) erzeugt wird.

6. Verfahren nach einem der vorhergehenden Ansprüche, bei dem die Schneidgasdüse (3, 3') und der Umlenkspiegel (12, 12') in einer zweiten Baueinheit (9b, 9b') eines Laserbearbeitungskopfs (9, 9') angeordnet werden, die um die der Strahleinfallsrichtung entsprechende Richtung (B) relativ zur einer ersten Baueinheit (9a, 9a') verdrehbar gelagert ist.

7. Laserbearbeitungsmaschine (7) zum Schneiden, insbesondere zum Schrägschneiden, eines Werkstücks (1) mittels eines Laserschneidstrahls (2), umfassend:

    einen Laserbearbeitungskopf (9, 9'), umfassend:

       eine erste Baueinheit (9a, 9a') zur Umlenkung des Laserschneidstrahls (2) aus einer ersten Richtung (C) in eine zweite, vorzugsweise zur ersten senkrechte Richtung (B), sowie eine an der ersten Baueinheit (9a, 9a') befestigte, um die zweite Richtung (B) drehbar gelagerte zweite Baueinheit (9b, 9b'), die eine Schneidgasdüse (3, 3') zur Erzeugung eines Überschall-Schneidgasstroms aufweist, wobei in der zweiten Baueinheit (9b, 9b') ein Umlenkspiegel (12, 12') zur Umlenkung des Laserstrahls (2) zur Schneidgasdüse (3, 3') vorgesehen ist, **dadurch gekennzeichnet, dass** der Umlenkspiegel (12, 12') in der zweiten Baueinheit (9b, 9b') drehbar um die zweite Richtung (B) und/oder um die Achsrichtung ($C_{SP}$) der Düsenachse (3a) gelagert ist, um den Laserschneidstrahl (2) in der Düsenöffnung (3b) der Schneidgasdüse (3) exzentrisch zur Düsenachse (3a) auszurichten, sowie

eine Steuerungseinrichtung (16) zum Ausrichten des Laserschneidstrahls (2) in der Düsenöffnung (3b) der Schneidgasdüse (3) exzentrisch zur Düsenachse (3a) durch Verdrehen des Umlenkspiegels (12, 12') um die zweite Richtung (B) und/oder um die Achsrichtung (CSP) der Düsenachse (3a), wobei die Steuerungseinrichtung (16) ausgelegt ist, für die exzentrische Ausrichtung den Umlenkspiegel (12, 12') unter einem Drehwinkel (α') aus einer Ruhelage, bei der die Strahlausfallsrichtung des Laserschneidstrahls (2) koaxial zur Düsenachse (3a) verläuft, zu verdrehen, und die zweite Baueinheit (9b, 9b') synchron unter demselben Drehwinkel (α') um die zweite Richtung (B) vermindert zu drehen.

8. Laserbearbeitungsmaschine nach Anspruch 7, bei der in der zweiten Baueinheit (9b, 9b') zwischen dem Umlenkspiegel (12, 12') und der Schneidgasdüse (3, 3') eine Fokussierlinse (13) angeordnet ist

9. Laserbearbeitungsmaschine nach Anspruch 7 oder 8, bei der der Umlenkspiegel (12') als Hohlspiegel ausgebildet ist.

10. Laserbearbeitungsmaschine nach Anspruch 9, bei der die Schneidgasdüse (3') als Ringspaltdüse ausgebildet ist.

11. Laserbearbeitungsmaschine nach einem der Ansprüche 7 bis 10, weiter umfassend eine Bewegungseinrichtung (11a, 14) zur Bewegung eines Werkstücks (1) und des Laserschneldstrahls (2) relativ zueinander unter einem insbesondere rechtwinklig zu einer Vorschubrichtung (Y) verlaufenden Schrägschneidwinkel (α), unter dem die Düsenachse (3a) der Schneidgasdüse (3) zur Werkstückoberfläche (1 a) des Werkstücks (1) ausgerichtet ist.

12. Computerprogrammprodukt, welches Codemittel zum Erstellen eines Bearbeitungsprogramms aufweist, das zum Durchführen aller Schritte des Verfahrens nach einem der Ansprüche 1 bis 6 angepasst ist, wenn das Bearbeitungsprogramm auf der Steuerungseinrichtung (16) der Laserbearbeitungsmaschine (7) nach einem der Ansprüche 7 bis 11 abläuft.

## Claims

1. Method for orientating a focused laser cutting beam (2) eccentrically relative to the nozzle axis (3a) of a cutting gas nozzle (3), **characterized by** rotating a redirecting mirror (12, 12') arranged in the beam path of the laser cutting beam (2) upstream of the cutting gas nozzle (3) about a direction (C$_{SP}$) which is coaxial with the nozzle axis (3a) and/or about a direction (B') which is perpendicular relative to the nozzle axis (3a) and which corresponds to the beam incidence direction of the laser beam (2) on the redirecting mirror (12, 12'), wherein, for the eccentric orientation, the redirecting mirror (12, 12') is rotated at an angle of rotation (α') from a rest position, in which the beam reflection direction of the laser cutting beam (2) extends coaxially relative to the nozzle axis (3a), the redirecting mirror (12, 12') simultaneously being rotated in a manner which is reduced together with the cutting gas nozzle (3) at the same angle of rotation (α') about the direction (B) corresponding to the beam incidence direction.

2. Method according to claim 1, wherein the laser cutting beam (2) is focused on a lens element (13) arranged between the redirecting mirror (12) and the cutting gas nozzle (3).

3. Method according to claim 1, wherein the laser cutting beam (2) is focused on the redirecting mirror (12') which is in the form of a concave mirror.

4. Method according to any one of the preceding claims, wherein a supersonic cutting gas flow (4) is produced at the cutting gas nozzle (3) by means of a lens element (13) and/or by means of a pressure window.

5. Method according to any one of the claims 1 to 3, wherein a supersonic cutting gas flow (4) is produced at the cutting gas nozzle (3') in the form of an annular gap nozzle.

6. Method according to any one of the preceding claims, wherein the cutting gas nozzle (3, 3') and the redirecting mirror (12, 12') are arranged in a second structural unit (9b, 9b') of a laser processing head (9, 9'), which unit is arranged for rotation about the direction (B) corresponding to the beam incidence direction relative to a first structural unit (9a, 9a').

7. Laser processing machine (7) for cutting, in particular obliquely cutting, a workpiece (1) by means of a laser cutting beam (2), comprising:

   a laser processing head (9, 9') comprising:

      a first structural unit (9a, 9a') for redirecting the laser cutting beam (2) from a first direction (C) into a second direction (B), which is preferably perpendicular to the first, and a second structural unit (9b, 9b') which is secured to the first structural unit (9a, 9a'), arranged for rotation about the second direction (B) and has a cutting gas nozzle (3, 3') for producing a supersonic cutting gas flow,

there being provided in the second structural unit (9b, 9b') a redirecting mirror (12, 12') for redirecting the laser beam (2) to the cutting gas nozzle (3, 3'), **characterized in that** the redirecting mirror (12, 12') in the second structural unit (9b, 9b') is arranged for rotation about the second direction (B) and/or about the axial direction ($C_{SP}$) of the nozzle axis (3a) in order to orientate the laser cutting beam (2) in the nozzle opening (3b) of the cutting gas nozzle (3) eccentrically relative to the nozzle axis (3a), and

a control device (16) for orientating the laser cutting beam (2) in the nozzle opening (3b) of the cutting gas nozzle (3) eccentrically relative to the nozzle axis (3a) by rotation of the redirecting mirror (12, 12') about the second direction (B) and/or about the axial direction ($C_{SP}$) of the nozzle axis (3a), wherein the control device (16) is configured for the eccentric orientation to rotate the redirecting mirror (12, 12') at an angle of rotation (α') out of a rest position, in which the beam reflection direction of the laser cutting beam (2) extends coaxially relative to the nozzle axis (3a), and to synchronously rotate the second structural unit (9b, 9b') at the same angle of rotation (α') to a lesser degree about the second direction (B).

8. Laser processing machine according to claim 7, wherein a focusing lens (13) is arranged in the second structural unit (9b, 9b') between the redirecting mirror (12, 12') and the cutting gas nozzle (3, 3').

9. Laser processing machine according to claim 7 or claim 8, wherein the redirecting mirror (12') is in the form of a concave mirror.

10. Laser processing machine according to claim 9, wherein the cutting gas nozzle (3') is in the form of an annular gap nozzle.

11. Laser processing machine according to any one of the claims 7 to 10, further comprising a movement device (11a, 14) for moving a workpiece (1) and the laser cutting beam (2) relative to each other at an oblique cutting angle (a) which extends particularly at right-angles relative to a direction of advance (Y) and at which the nozzle axis (3a) of the cutting gas nozzle (3) is orientated relative to the workpiece surface (1a) of the workpiece (1).

12. Computer program product which has encoding means for setting up a processing program which is adapted to carry out all the steps of the method according to any one of claims 1 to 6 when the processing program is executed on the control device (16) of the laser processing machine (7) according to any one of the claims 7 to 11.

**Revendications**

1. Procédé d'orientation d'un faisceau laser de coupe focalisé (2) de manière excentrée par rapport à l'axe de buse (3a) d'une buse de gaz de coupe (3), **caractérisé par** :

   rotation d'un miroir de déviation (12, 12') disposé avant la buse de gaz de coupe (3) dans le chemin optique du faisceau laser de coupe (2) autour d'une direction ($C_{SP}$) coaxiale à l'axe de buse (3a) et/ou autour d'une direction (B') perpendiculaire à l'axe de buse (3a), correspondant à la direction d'incidence des rayons du faisceau laser (2) sur le miroir de déviation (12, 12'), l'orientation excentrée étant obtenue par rotation du miroir de déviation (12, 12') suivant un angle de rotation (a') à partir d'une position de repos dans laquelle la direction d'émergence des rayons du faisceau laser de coupe (2) est coaxiale à l'axe de buse (3a), le miroir de déviation (12, 12') étant en même temps tourné en commun avec la buse de gaz de coupe (3) de manière réduite suivant le même angle de rotation (a') autour de la direction (B) correspondant à la direction d'incidence des rayons.

2. Procédé selon la revendication 1, dans lequel le faisceau laser de coupe (2) est focalisé sur un élément lenticulaire (13) disposé entre le miroir de déviation (12) et la buse de gaz de coupe (3).

3. Procédé selon la revendication 1, dans lequel le faisceau laser de coupe (2) est focalisé sur le miroir de déviation (12') réalisé sous la forme d'un miroir concave.

4. Procédé selon l'une des revendications précédentes, dans lequel un courant de gaz de coupe supersonique (4) est généré à la buse de gaz de coupe (3) au moyen d'un élément lenticulaire (13) et/ou au moyen d'une fenêtre de pression.

5. Procédé selon l'une des revendications 1 à 3, dans lequel un courant de gaz de coupe supersonique (4) est généré à la buse de gaz de coupe (3') réalisée sous la forme d'une buse à fente annulaire.

6. Procédé selon l'une des revendications précédentes, dans lequel la buse de gaz de coupe (3, 3') et le miroir de déviation (12, 12') sont disposés dans une deuxième unité de construction (9b, 9b') d'une tête d'usinage au laser (9, 9'), qui est montée à rotation par rapport à une première unité de construction (9a, 9a') autour de la direction (B) correspondant à la direction d'incidence des rayons.

7. Machine d'usinage au laser (7) pour la coupe, en particulier la coupe oblique, d'une pièce (1) au moyen d'un faisceau laser de coupe (2), comprenant :

une tête d'usinage au laser (9, 9'), comprenant :

une première unité de construction (9a, 9a') pour dévier le faisceau laser de coupe (2) d'une première direction (C) dans une deuxième direction (B), de préférence perpendiculaire à la première, ainsi qu'une deuxième unité de construction (9b, 9b') fixée sur la première unité de construction (9a, 9a'), montée tournante autour de la deuxième direction (B), qui présente une buse de gaz de coupe (3, 3') pour générer un courant de gaz de coupe supersonique, un miroir de déviation (12, 12') pour dévier le faisceau laser (2) vers la buse de gaz de coupe (3, 3') étant prévu dans la deuxième unité de construction (9b, 9b'), **caractérisée en ce que** le miroir de déviation (12, 12') est monté tournant dans la deuxième unité de construction (9b, 9b') autour de la deuxième direction (B) et/ou autour de la direction d'axe ($C_{SP}$) de l'axe de buse (3a) pour orienter le faisceau laser de coupe (2) dans l'ouverture de buse (3b) de la buse de gaz de coupe (3) de façon excentrée par rapport à l'axe de buse (3a), ainsi que un dispositif de commande (16) pour orienter le faisceau laser de coupe (2) dans l'ouverture de buse (3b) de la buse de gaz de coupe (3) de façon excentrée par rapport à l'axe de buse (3a) par rotation du miroir de déviation (12, 12') autour de la deuxième direction (B) et/ou autour de la direction d'axe ($C_{SP}$) de l'axe de buse (3a), le dispositif de commande (16) étant conçu, pour l'orientation excentrée, pour tourner le miroir de déviation (12, 12') suivant un angle de rotation (a') à partir d'une position de repos dans laquelle la direction d'émergence des rayons du faisceau laser de coupe (2) est coaxiale à l'axe de buse (3a) et pour tourner de manière réduite la deuxième unité de construction (9b, 9b') de façon synchrone suivant le même angle de rotation (a') autour de la deuxième direction (B).

8. Machine d'usinage au laser selon la revendication 7, dans laquelle une lentille de focalisation (13) est disposée entre le miroir de déviation (12, 12') et la buse de gaz de coupe (3, 3').

9. Machine d'usinage au laser selon la revendication 7 ou 8, dans laquelle le miroir de déviation (12') est réalisé sous la forme d'un miroir concave.

10. Machine d'usinage au laser selon la revendication 9, dans laquelle la buse de gaz de coupe (3') est réalisée sous la forme d'une buse à fente annulaire.

11. Machine d'usinage au laser selon l'une des revendications 7 à 10, comprenant en outre un dispositif de déplacement (11a, 14) pour déplacer une pièce (1) et le faisceau laser de coupe (2) l'un par rapport à l'autre suivant un angle de coupe oblique (a), en particulier perpendiculaire à une direction d'avance (Y), suivant lequel l'axe de buse (3a) de la buse de gaz de coupe (3) est orienté par rapport à la surface de pièce (1a) de la pièce (1).

12. Produit programme d'ordinateur, lequel présente des moyens de codage pour générer un programme d'usinage qui est adapté à l'exécution de toutes les étapes du procédé selon l'une des revendications 1 à 6 lorsque le programme d'usinage se déroule sur le dispositif de commande (16) de la machine d'usinage au laser (7) selon l'une des revendications 7 à 11.

Fig. 1a

Fig. 1b

Fig. 2

Fig. 3a

Fig. 3b

Fig. 4a

Fig. 4b

Fig. 4c

Fig. 5a

$$\tan \alpha' = \frac{e}{f}$$

Fig. 5b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 4557470 A
- EP 1684046 A1

- EP 0873813 B1

**In der Beschreibung aufgeführte Nicht-Patentliteratur**

- **VON J. WILLACH et al.** Melt Expulsion by a Coaxial Gas Jet in Trepanning of CMSX-4 with Microsecond Nd:YAG Laser Radiation. *Proceedings of the SPIE,* vol. 5063, 435-440